# EUROPEAN PATENT APPLICATION

(11) **EP 4 585 466 A1**
(43) Date of publication of application: **16.07.2025**
(21) Application number: 23863132.9
(22) Date of filing: 04.09.2023
(51) Int. Cl.: B60Q 1/26, B60Q 1/50

(54) **ROAD SURFACE DRAWING DEVICE FOR VEHICLE**

(30) Priority: 09.09.2022 JP 2022143661
(71) Applicant: Koito Manufacturing Co., Ltd., Tokyo 141-0001 (JP)
(72) Inventor: WATANO Yuichi, Shizuoka-shi, Shizuoka 424-8764 (JP); TOTSUKA Takahiro, Shizuoka-shi, Shizuoka 424-8764 (JP); MARUYAMA Yuta, Shizuoka-shi, Shizuoka 424-8764 (JP); NAGAI Hikaru, Shizuoka-shi, Shizuoka 424-8764 (JP)
(74) Representative: Grünecker Patent- und Rechtsanwälte PartG mbB
(86) International application number: PCT/JP2023/032196
(87) International publication number: WO 2024/053594

(57) **Abstract**

A road surface drawing device (101) for a vehicle is to be provided in a vehicle (1) in which shift positions including at least a reverse position "R" can be changed by operating a shift lever (SL), the road surface drawing device (101) for a vehicle comprising: a road surface drawing unit (11) that illuminates a road surface rearward of the vehicle (1) with an optical pattern indicating movement of the vehicle (1) in reverse; and a control unit (12) that performs control with respect to the road surface drawing unit (11) so that, if the shift lever (SL) is moved past the reverse position "R", illumination with the optical pattern is not performed.

## Description

### TECHNICAL FIELD

The present disclosure relates to a vehicle road surface drawing device.

In the related art, a technique related to a road surface drawing device mounted on a vehicle has been developed. For example, Patent Literature 1 discloses a vehicle projection device having a function of drawing a light pattern on a road surface behind a vehicle in a case where it is detected that a position of a shift lever of the vehicle is switched to a reverse position.

### CITATION LIST

### PATENT LITERATURE

Patent Literature 1: WO2022/030181 A1

### SUMMARY OF INVENTION

### TECHNICAL PROBLEM

In an automatic vehicle, in a case where a driver moves a vehicle forward from a stop state of the vehicle, the driver moves a position of a shift lever of the vehicle from "P" (parking position) to "D" (drive position). At this time, the position of the shift lever is changed from "P" to "D" via "R" (the reverse position) and "N" (neutral position).

In a case where a light pattern is projected on the road surface behind the vehicle at a timing when a position of the shift lever is switched to "R" as in the vehicle projection device described in Patent Literature 1, the light pattern is instantaneously projected on the road surface behind the vehicle until the position of the shift lever moves from "P" to "D". In such a case, although the driver does not intend to move the vehicle backward, the person around the vehicle may erroneously recognize that the vehicle is moving backward and take an action such as moving to avoid the rear of the vehicle.

The present disclosure has been made to solve the above-described problem, and an object of the present disclosure is to provide a vehicle road surface drawing device capable of projecting a light pattern on a road surface behind a vehicle in a case where the vehicle actually moves backward.

### SOLUTION TO PROBLEM

In order to achieve the above object, a vehicle road surface drawing device according to one aspect of the present disclosure is a vehicle road surface drawing device provided in a vehicle configured to change a shift position including at least a reverse position by operating a shift lever, the vehicle road surface drawing device including:
a road surface drawing unit configured to project a light pattern indicating backward movement of the vehicle on a road surface behind the vehicle; and
a controller configured to perform a control over the road surface drawing unit such that the road surface drawing unit does not project the light pattern, in a case where the shift lever passes through the reverse position.

### ADVANTAGEOUS EFFECTS OF INVENTION

According to the present disclosure, in a case where the vehicle actually moves backward, the light pattern can be projected on the road surface behind the vehicle.

### BRIEF DESCRIPTION OF DRAWINGS

[FIG. 1] FIG. 1 is a diagram illustrating a configuration of a vehicle road surface drawing device according to an embodiment of the present disclosure.
[FIG. 2] FIG. 2 is a view illustrating an example of a shift lever in a vehicle illustrated in FIG. 1.
[FIG. 3] FIG. 3 is a view illustrating an example of an arrangement position of a road surface drawing unit illustrated in FIG. 1 and a light pattern projected by the road surface drawing unit.
[FIG. 4] FIG. 4 is a view illustrating a problem in a vehicle road surface drawing device of the relate art.
[FIG. 5] FIG. 5 is another view illustrating the problem in the vehicle road surface drawing device of the related art.
[FIG. 6] FIG. 6 is a table illustrating permission or non-permission of projection of a light pattern by a controller illustrated in FIG. 1 for each scene.
[FIG. 7] FIG. 7 is a flowchart illustrating a flow of operations of the vehicle road surface drawing device according to the embodiment of the present disclosure.

### DESCRIPTION OF EMBODIMENTS

### [Overall Configuration]

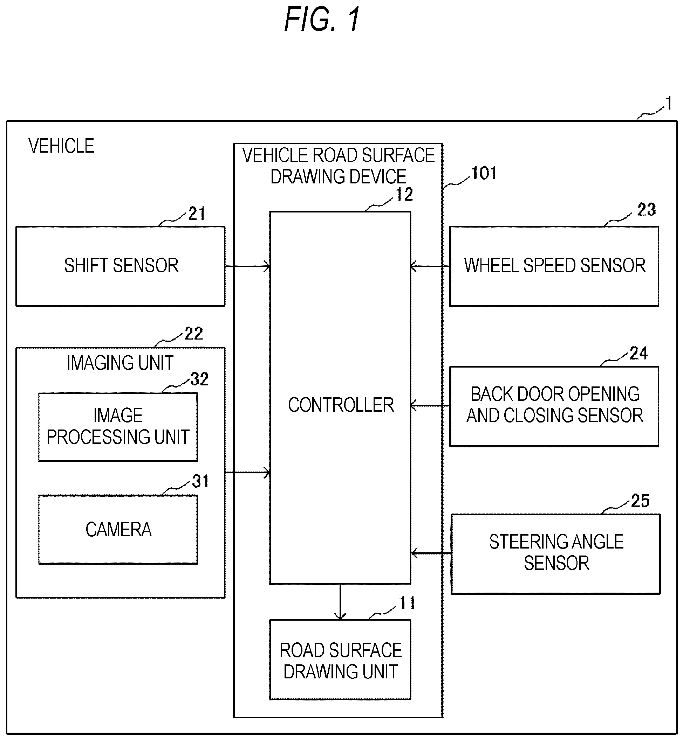

The present disclosure will be described with reference to the drawings. FIG. 1 is a diagram illustrating a configuration of a vehicle road surface drawing device 101 according to an embodiment of the present disclosure. As illustrated in FIG. 1, the vehicle road surface drawing device 101 is mounted on a vehicle 1. The vehicle road surface drawing device 101 includes a road surface drawing unit 11 configured to project a light pattern X and a controller 12 configured to perform a control over the road surface drawing unit 11 (hereinafter, referred to as "road surface drawing control"). The light pattern X indicates that the vehicle 1 moves backward on a road surface behind the vehicle 1. The road surface drawing unit 11 and the controller 12 may be provided in the same unit or may be provided in different units.

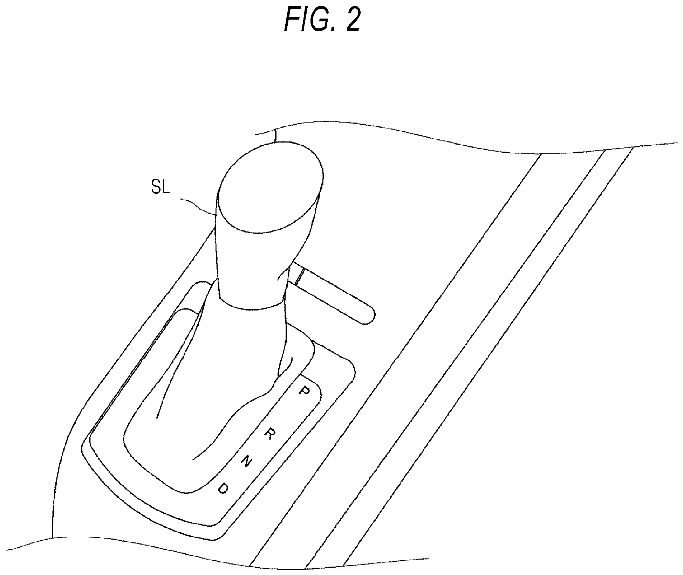

FIG. 2 is a view illustrating an example of a shift lever SL in the vehicle 1 illustrated in FIG. 1. Referring to FIG. 2, a driver can change a position of shift lever SL (hereinafter also referred to as "shift position") by operating the shift lever SL. For example, the vehicle 1 is an automatic vehicle in which shift positions are linearly arranged in an order of "P" (parking position), "R", "N" (neutral position), and "D" (drive position).

The shift lever SL illustrated in FIG. 2 is operated so as to move linearly to change the shift position, but is not limited to such a configuration, and the shift position may be changed by the shift lever moving along a path other than a non-linear line, such as a stepped path.

Referring again to FIG. 1, the vehicle 1 includes a shift sensor 21, an imaging unit 22, a wheel speed sensor 23, a back door opening and closing sensor 24, and a steering angle sensor 25, in addition to the vehicle road surface drawing device 101. The shift sensor 21 is configured to transmit, for example, position information indicating a current shift position to the controller 12, through communication according to a controller area network (CAN). The shift sensor 21 is configured to update the content of the position information, at predetermined intervals such as every second.

The shorter the predetermined interval, the more quickly the switching of the shift position of the shift lever SL can be detected. However, in the present disclosure, in a case where the shift lever SL is moved to the shift position intended by the driver, the predetermined interval is preferably set to a time sufficiently longer than an instantaneous time it takes for the shift lever SL to pass a shift position other than the selected shift position.

The imaging unit 22 includes a camera 31 and an image processing unit 32. The camera 31 is configured to capture an image of the surroundings of the vehicle 1 and to output image data of the captured image to the image processing unit 32. The image processing unit 32 is configured to perform image processing on the image data received from the camera 31 to transmit, to the controller 12, a detection result indicating the presence or absence of a moving body such as a person or the other vehicle around the vehicle 1.

The wheel speed sensor 23 is configured to detect, for example, a rotation speed and a rotation direction of a wheel in the vehicle 1, and to transmit a detection result to the controller 12. The back door opening and closing sensor 24 is configured to detect that a back door BD of the vehicle 1 is opened, and to transmit, to the controller 12, a detection result indicating that the back door BD is opened. For example, the back door opening and closing sensor 24 is configured to periodically transmit the detection result indicating that the back door BD is opened, until the back door BD is closed.

The steering angle sensor 25 is configured to detect, for example, a steering angle of a wheel steered by a driver's steering wheel operation, and to transmit a detection result to the controller 12. Here, the steering angle when the vehicle 1 travels in a right direction is a positive value, and the steering angle when the vehicle 1 travels in a left direction is a negative value.

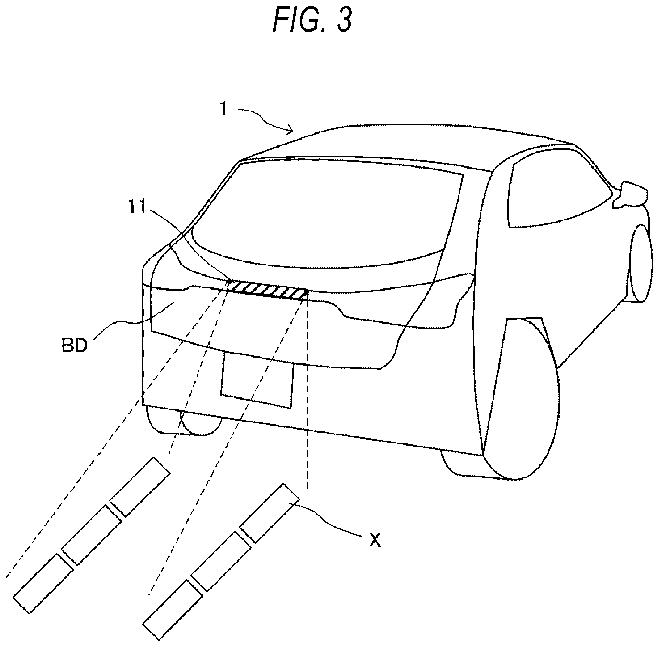

FIG. 3 is a view illustrating an example of an arrangement position of the road surface drawing unit 11 illustrated in FIG. 1 and the light pattern X projected by the road surface drawing unit 11. As illustrated in FIG. 3, the road surface drawing unit 11 is disposed, for example, at a position near a center of the back door BD of the vehicle 1 in a left-right direction of the vehicle 1. In FIG. 3, in order to make the arrangement position of the road surface drawing unit 11 easy to understand, the arrangement position of the road surface drawing unit 11 is hatched.

The road surface drawing unit 11 includes a light source which is not illustrated. The light from the light source is emitted toward the road surface behind the vehicle 1, so that the light pattern X is projected on the road surface. The light pattern X indicates that the vehicle 1 moves backward, and further indicates a travel direction of the vehicle 1 when moving backward.

Specifically, it is assumed that in order to cause the vehicle 1 to move straight rearward, the driver switches the shift position to "R" and further operates the steering wheel so that the steering angle of the wheel becomes 0°. In this case, as illustrated in FIG. 3, for example, the controller 12 controls the road surface drawing unit 11 such that the light pattern X having a broken line shape linearly extending from the rear of the vehicle 1 is projected.

It is assumed that in order to cause the vehicle 1 to move to the right rear, the driver switches the shift position to "R" and further operates the steering wheel so that the steering angle becomes a value greater than 0°. In this case, for example, the controller 12 controls the road surface drawing unit 11 such that the light pattern X having a broken line shape curved from the rear of the vehicle 1 toward the right is projected.

It is assumed that in order to cause the vehicle 1 to move to the left rear, the driver switches the shift position to "R" and further operates the steering wheel so that the steering angle becomes a value smaller than 0°. In this case, for example, the controller 12 controls the road surface drawing unit 11 such that the light pattern X having a broken line shape curved from the rear of the vehicle 1 toward the left is projected.

The road surface drawing unit 11 is not limited to the configuration in which the road surface drawing unit 11 is disposed near the center of the back door BD in the left-right direction, and may be disposed in the same lamp body as a rear combination lamp or the like in which a plurality of lamps such as a direction display lamp, a brake lamp, and a tail lamp are integrated, which is provided in the rear of the vehicle 1.

However, in a case where the road surface drawing unit 11 is disposed in the same lamp body as a rear combination lamp or the like that may be disposed at a side end portion of the vehicle, the light pattern X projected by the road surface drawing unit 11 may approach a white line drawn on the road surface behind the vehicle 1. In such a case, it may be difficult for a driver or the like of the other vehicle positioned behind the vehicle 1 to distinguish the white line from the light pattern X from the vehicle 1. Therefore, the road surface drawing unit 11 is preferably disposed near the center of the back door BD in the left-right direction so that the light pattern X does not approach the white line.

### [Description of Problems]

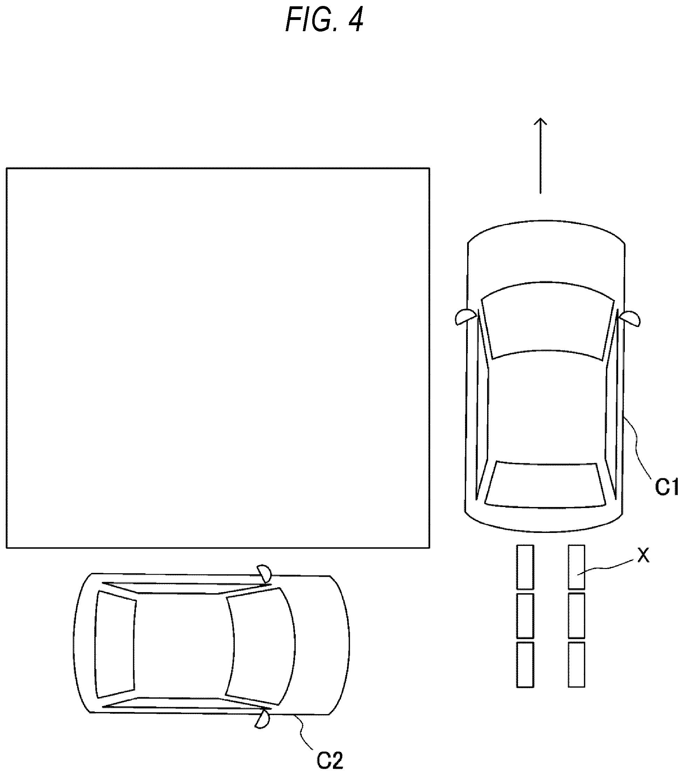

FIG. 4 is a view illustrating a problem in a vehicle road surface drawing device of the relate art. Referring to FIG. 4, it is assumed that the driver moves the shift lever SL of a vehicle C1 from "P" to "D" in order to move the vehicle C1 forward from a stop state of the vehicle C1. At this time, the shift position is changed from "P" to "D" via "R" and "N".

Here, in a case where the light pattern X is projected on the road surface behind the vehicle C1 at a timing when the shift position is switched to "R" as in the vehicle road surface drawing device of the related art, the light pattern X is instantaneously projected on the road surface behind the vehicle C1 until the shift position moves from "P" to "D".

For example, as illustrated in FIG. 4, in a case where the vehicle C1 is stopped near the shade, as described above, it is assumed that the light pattern X is instantaneously emitted to the rear of the vehicle C1 by the operation of the shift lever SL for moving the vehicle C1 forward. In this case, the driver of the other vehicle C2 may erroneously recognize that the vehicle C1 moves backward by looking at the light pattern X from the vehicle C1, and may continue to erroneously recognize that the vehicle C1 moves backward even after the vehicle C1 moves forward because the entire movement of the vehicle C1 cannot be grasped.

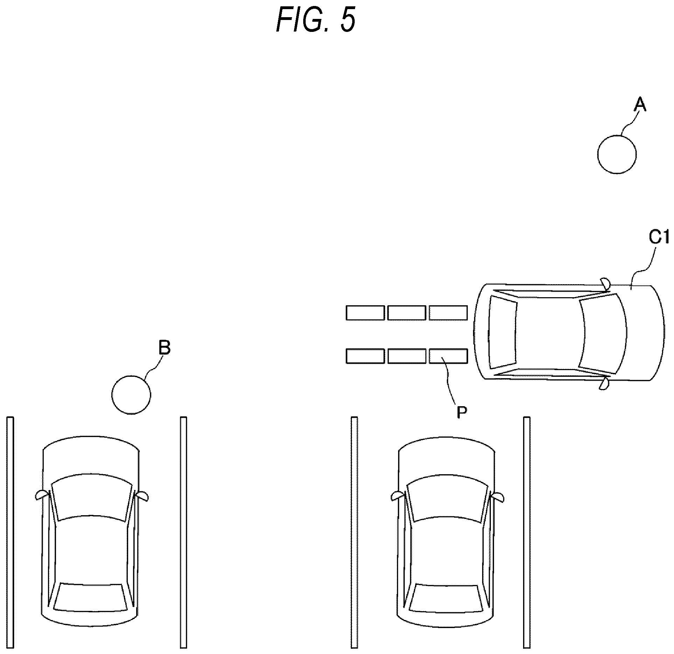

FIG. 5 is another view illustrating the problem in the vehicle road surface drawing device of the related art. For example, as illustrated in FIG. 5, it is assumed that the driver of the vehicle C1 changes the vehicle C1 from a traveling state to the stop state in order to cause a person A to get into the vehicle C1 near the parking lot. In this case, the shift position of the vehicle C1 is changed from "D" to "P" via "N" and "R".

That is, when the vehicle road surface drawing device of the related art is mounted on the vehicle C1, the light pattern X is instantaneously projected on the road surface behind the vehicle C1 until the shift position is changed from "D" to "P". In such a case, for example, a person B behind the vehicle C1 may erroneously recognize that the vehicle C1 enters the parking lot by backward movement, and may take an action such as waiting for the vehicle C1 to enter the parking lot.

In the vehicle road surface drawing device 101 according to the present disclosure, in order to solve the problem as described above, a road surface drawing control is performed as described below.

Depending on the vehicle, not only the light pattern X but also a back lamp is turned on at the timing when the shift position is switched to "R". In such a vehicle, when the driver moves the vehicle forward from the stop state, that is, when the position of the shift lever SL of the vehicle is switched from "P" to "D", the back lamp is instantaneously turned on.

However, in a case where the light pattern X is instantaneously projected on the road surface behind the vehicle by the vehicle road surface drawing device, compared to the turning-on of the back lamp, the brightness of the light is strong, a projected region is large, and the like, and thus a much strong impression is given to surrounding persons. Therefore, when the vehicle road surface drawing device 101 is turned on at an unintended timing, a person around the vehicle is likely to erroneously recognize that the vehicle moves backward. Therefore, it is further desired to solve the above problems.

### [Details of Road Surface Drawing Control]

### (Control Based on Time When Shift Position is in "R")

Referring again to FIG. 1, the controller 12 performs the road surface drawing control on the road surface drawing unit 11 so as not to project the light pattern X in the case where the position of the shift lever SL in the vehicle 1 passes through "R". More specifically, in a case where the shift position is continuously in "R" for a predetermined time or more, the controller 12 permits the road surface drawing unit 11 to project the light pattern X.

Specifically, as described above, the content of the position information from the shift sensor 21 is updated, for example, every second. The controller 12 is configured to periodically check the position information, and to permit the road surface drawing unit 11 to project the light pattern X in a case where the shift position indicated by the position information is in "R" continuously in two or more updates. That is, the controller 12 is configured to periodically check the position information, and to permit the road surface drawing unit 11 to project the light pattern X in a case where the shift position indicated by the position information is in "R" continuously for two seconds or more. In this case, the controller 12 controls the road surface drawing unit 11, based on the detection result from the steering angle sensor 25, such that the linearly extending or curved light pattern X is projected to the rear of the vehicle 1.

On the other hand, in a case where the time during which the shift position is in "R" is less than the predetermined time, the controller 12 does not permit the road surface drawing unit 11 to project the light pattern X. That is, in a case where the state in which the shift position indicated by the position information is in "R" does not continue for two seconds or more, the controller 12 does not permit the road surface drawing unit 11 to project the light pattern X. In other words, the controller 12 controls the road surface drawing unit 11 such that the light pattern X is not projected.

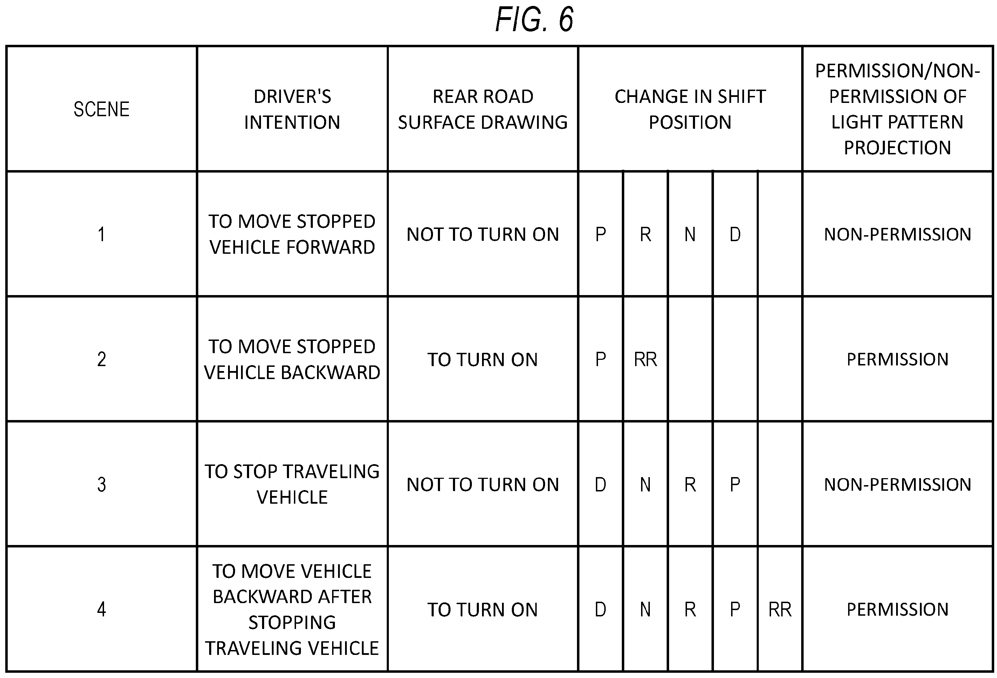

FIG. 6 is a table illustrating permission or non-permission of projection of the light pattern X by the controller 12 illustrated in FIG. 1 for each scene. Referring to FIG. 6, it is assumed that the driver moves the shift lever SL from "P" to "D" to move the vehicle 1 forward from the stop state of the vehicle 1 as in scene 1. At this time, the shift position is changed from "P" to "D" via "R" and "N". In this case, the shift position is momentarily switched to "R", but the state in which the shift position is in "R" does not continue for two seconds or more. Therefore, the controller 12 does not permit the projection of the light pattern X, and the projection of the light pattern X is not performed.

As in scene 2, it is assumed that the driver moves the shift lever SL from "P" to "R" in order to move the vehicle 1 backward from the stop state of the vehicle 1. In this case, the shift position is changed from "P" to "R", and the state in which the shift position is in "R" continues for two seconds or more. Therefore, the controller 12 permits the projection of the light pattern X, and the projection of the light pattern X is performed. In FIG. 6, "RR" indicates that the state in which the shift position is in "R" continues for two seconds or more.

As in scene 3, it is assumed that the driver moves the shift lever SL from "D" to "P" in order to stop the vehicle 1 from the traveling state of the vehicle 1. At this time, the shift position is changed from "D" to "P" via "N" and "R". In this case, the shift position is momentarily switched to "R", but the state in which the shift position is in "R" does not continue for two seconds or more. Therefore, the controller 12 does not permit the projection of the light pattern X, and the projection of the light pattern X is not performed.

As in scene 4, it is assumed that the driver moves the shift lever SL from "D" to "P" and further moves the shift lever SL from "P" to "R" in order to stop the vehicle 1 from the traveling state of the vehicle 1 and further move the vehicle 1 backward. When the shift position moves from "D" to "P", the shift position is changed from "D" to "P" via "N" and "R", but the state in which the shift position is in "R" does not continue for two seconds or more. Therefore, the controller 12 does not permit the projection of the light pattern X, and the projection of the light pattern X is not performed. On the other hand, after the shift position moves from "P" to "R", the state in which the shift position is in "R" continues for two seconds or more. Therefore, the controller 12 permits the projection of the light pattern X, and the projection of the light pattern X is performed.

### (Control Based on Vehicle Speed in Direction of Moving Backward)

Referring again to FIG. 1, as the road surface drawing control, the controller 12 is further configured to permit the road surface drawing unit 11 to project the light pattern X in a case where a rotation speed of the wheel in a direction in which the vehicle 1 moves backward is equal to or greater than a threshold value. More specifically, the controller 12 is configured to receive the detection result transmitted from the wheel speed sensor 23, calculate the vehicle speed based on the detection result, and check whether the vehicle speed in the direction in which the vehicle 1 moves backward is equal to or greater than a threshold value. The threshold value is a value greater than zero, for example, 2 km/h. Further, in the case where the vehicle speed in the direction in which the vehicle 1 moves backward is equal to or greater than the threshold value, the controller 12 permits the road surface drawing unit 11 to project the light pattern X regardless of the shift position.

That is, according to the above configuration, regardless of the shift position, the light pattern X cannot be projected in a case where the vehicle 1 does not move backward, and the light pattern X can be projected in a case where the vehicle 1 moves backward. For example, even when the shift position is in "P" or "N", the vehicle 1 may move backward when the vehicle 1 is positioned halfway up an uphill slope. In such a case, since the light pattern X is projected to the rear of the vehicle 1, it is possible to appropriately notify the surroundings of the backward movement of the vehicle 1.

### (Control Based on Presence or Absence of Surrounding Moving Body)

In a case where the detection result from the image processing unit 32 indicates that there is no moving body around the vehicle 1, the controller 12 does not further permit the road surface drawing unit 11 to project the light pattern X as the road surface drawing control. As described above, in a situation in which it is less necessary to notify the surroundings of the backward movement of the vehicle 1, the projection of the light pattern X can be more appropriately controlled by performing a control such that the light pattern X is not projected.

The image processing unit 32 is not limited to the configuration of transmitting the detection result indicating the presence or absence of the moving body around the vehicle 1, and may transmit the detection result including at least one of a distance between the vehicle 1 and each moving body, a direction from the vehicle 1 to each moving body, and the size of a free space around the vehicle 1 based on the image data from the camera 31. The free space is an area where a fixed object such as a building does not exist. The size of the free space is indicated by, for example, a distance from a fixed object such as a building present around the vehicle 1 to the vehicle 1.

In such a case, the controller 12 may be configured not to permit projection of the light pattern X, for example, in the case where there is no moving body within a range of a predetermined distance from the vehicle 1 based on the detection result from the image processing unit 32. The controller 12 may change the range of the predetermined distance in accordance with the size of the free space indicated by the detection result. In addition, the controller 12 may be configured not to permit projection of the light pattern X in a case where there is no moving body behind the vehicle 1 based on the detection result.

The image processing unit 32 may be included in the vehicle road surface drawing device 101. The image processing unit 32 may be configured not only to receive the image data from the camera 31 but also to receive measurement results from sensors such as a millimeter wave radar, a sonar, and a light detection and ranging (LiDAR) (not illustrated) mounted on the vehicle 1.

### (Modification of Control Based on Presence or Absence of Surrounding Moving Body)

In a case where the detection result from the image processing unit 32 indicates that there is no moving body around the vehicle 1, the controller 12 may be configured to permit the road surface drawing unit 11 to project the light pattern X, contrary to the above-described control content. In this way, in a situation in which there is no moving body in the vicinity that may cause an erroneous recognition that the vehicle 1 is moving backward, the control is performed such that the light pattern X is projected, so that it is possible to more appropriately control the projection of the light pattern X.

Even when such control is performed, the controller 12 may determine whether to permit the projection of the light pattern X by using at least one of the distance between the vehicle 1 and each moving body, the direction from the vehicle 1 to each moving body, and the size of the free space around the vehicle 1.

### (Control Based on Opening and Closing of Back Door)

In a case where the back door BD of the vehicle 1 is opened, the controller 12 does not further permit the road surface drawing unit 11 to project the light pattern X as the road surface drawing control.

More specifically, as described above, for example, the back door opening and closing sensor 24 is configured to periodically transmit the detection result indicating that the back door BD is opened to the controller 12, until the back door BD is closed. Therefore, after receiving the detection result from the back door opening and closing sensor 24, the controller 12 controls the road surface drawing unit 11 such that the light pattern X is not projected until a state in which a new detection result from the back door opening and closing sensor 24 is not received elapses for a predetermined time. The predetermined time here is a time longer than a transmission cycle of the detection result by the back door opening and closing sensor 24.

As described above, the road surface drawing unit 11 is disposed on the back door BD of the vehicle 1. For this reason, in a situation in which there is a person who is performing work such as opening the back door BD and taking a package in and out of the trunk, if the light pattern X is projected, the person is dazzled. Even when the road surface drawing unit 11 is not disposed on the back door BD, the road surface drawing unit 11 illuminates the rear of the vehicle 1 with light, which can cause glare to a person working behind the vehicle 1.

On the other hand, as described above, the controller 12 performs the road surface drawing control such that the light pattern X is not projected in a situation in which the back door BD is open. Further, the controller 12 performs the road surface drawing control such that the projection of the light pattern X is stopped in the case where the back door BD is open even in a situation in which the vehicle 1 is moving backward and the light pattern X is being projected. Accordingly, it is possible to prevent a person who performs work by opening the back door BD from being dazzled.

The controller 12 is not limited to the configuration in which all the road surface drawing controls described above are performed, and may be configured not to perform one or more of a control based on the vehicle speed in the direction of moving backward, a control based on the presence or absence of a surrounding moving body, and a control based on the opening and closing of the back door BD.

A vehicle electronic controller (ECU) mounted on the vehicle 1 may instruct the controller 12 to project the light pattern X according to the shift position. In such a configuration, the controller 12 may perform the above road surface drawing control regardless of the content of the instruction from the vehicle ECU.

### [Flow of Operation]

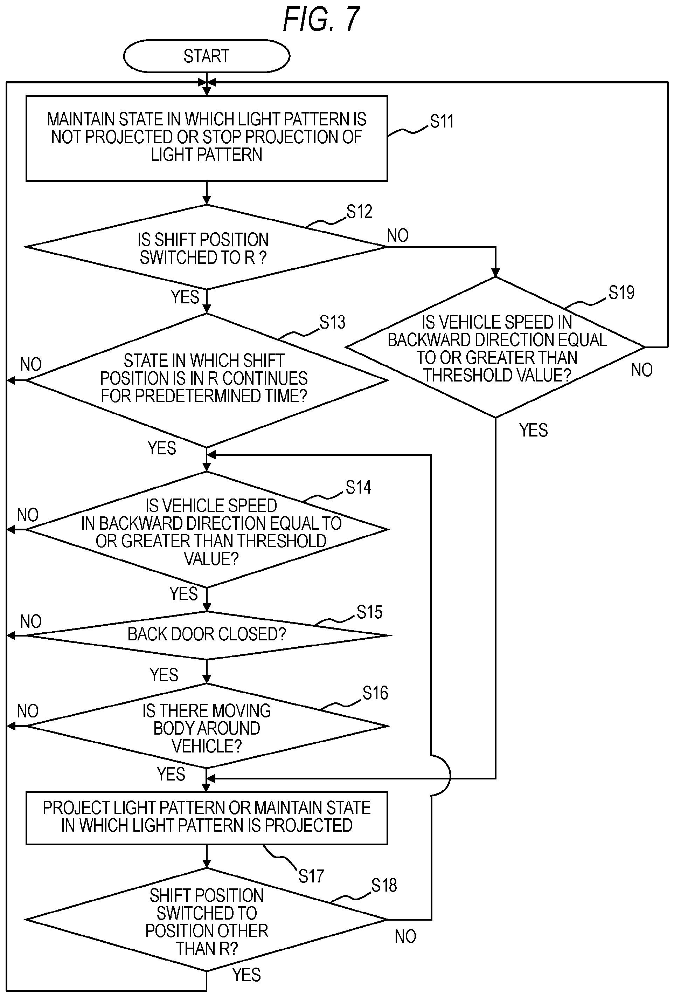

FIG. 7 is a flowchart illustrating a flow of operations of the vehicle road surface drawing device 101 according to the embodiment of the present disclosure. Here, the controller 12 is configured not to permit projection of the light pattern X in the case where there is no moving body around the vehicle 1 in the control based on the presence or absence of the moving body.

Referring to FIG. 7, first, it is assumed that the driver performs an operation of switching on an ignition key of vehicle 1. At this time, the shift position is in "P". In this case, the controller 12 starts periodic check of the position information from the shift sensor 21 while maintaining a state in which the light pattern X is not projected (step S11).

Next, the controller 12 determines whether the shift position is switched to "R" based on the position information (step S12). When the shift position is switched to "R" ("YES" in step S12), the controller 12 checks whether the state in which the shift position is in "R" has continued for the predetermined time or more (step S13).

Next, in the case where the state in which the shift position is in "R" continues for the predetermined time or more ("YES" in step S13), the controller 12 determines whether the vehicle speed in the direction in which the vehicle 1 moves backward is equal to or greater than the threshold value, based on the detection result from the wheel speed sensor 23 (step S14).

Next, in a case where the vehicle speed in the direction in which the vehicle 1 moves backward is equal to or greater than the threshold value ("YES" in step S14), the controller 12 determines whether the back door BD is closed, based on a reception status of the detection result from the back door opening and closing sensor 24 (step S15).

Next, in a case where the detection result from the back door opening and closing sensor 24 is not received, the controller 12 determines that the back door BD is closed ("YES" in step S15), and checks the content of the detection result from the image processing unit 32 (step S16).

Next, it is assumed that the detection result from the image processing unit 32 indicates that a moving body is present around the vehicle 1 ("YES" in step S16). In this case, the controller 12 controls the road surface drawing unit 11 to project the light pattern X (step S17).

Next, the controller 12 checks whether the shift position has been switched to a position other than "R" by checking new position information (step S18). When the shift position is switched to the position other than "R" ("YES" in step S18), the controller 12 controls the road surface drawing unit 11 to stop the projection of the light pattern X (step S11). Then, the controller 12 performs the operation of step S12 and the subsequent steps again.

On the other hand, when the shift position is not switched to the position other than "R", that is, when the state in which the shift position is in "R" continues ("NO" in step S18), the controller 12 performs the operation of step S14 and the subsequent steps again.

In a case where the shift position is not switched to "R" in step S12 ("NO" in step S12), the controller 12 determines whether the vehicle speed in the direction in which the vehicle 1 moves backward is equal to or greater than the threshold value based on the detection result from the wheel speed sensor 23 (step S19).

When the vehicle speed in the direction in which the vehicle 1 moves backward is equal to or greater than the threshold value ("YES" in step S19), the controller 12 controls the road surface drawing unit 11 to project the light pattern X (step S17). On the other hand, in a case where the vehicle speed in the direction in which the vehicle 1 moves backward is less than the threshold value ("NO" in step S19), the controller 12 controls the road surface drawing unit 11 such that the state in which the light pattern X is not projected is maintained (step S11).

In the case where the state in which the shift position is in "R" does not continue for the predetermined time or more in step S13 ("NO" in step S13), in the case where the vehicle speed in the direction in which the vehicle 1 moves backward is less than the threshold value in step S14 ("NO" in step S14), in the case where it is determined that the back door BD is open in step S15 ("NO" in step S15), or in the case where there is no moving body around the vehicle 1 in step S16 ("NO" in step S16), the controller 12 controls the road surface drawing unit 11 such that the state in which the light pattern X is not projected is maintained (step S11).

The flow of the operation of the controller 12 is not limited to the order of the steps described above, and for example, the order of step S14, step S15, and step S16 may be switched.

As described above, for the vehicle road surface drawing device 101, (1) the vehicle road surface drawing device 101 provided in the vehicle 1 configured to change the shift position including at least "R" by operating the shift lever SL includes the road surface drawing unit 11 configured to project the light pattern X indicating the backward movement of the vehicle 1 on the road surface behind the vehicle 1, and the controller 12 configured to perform a control over the road surface drawing unit 11 such that the road surface drawing unit 11 does not project the light pattern X, in a case where the shift lever SL passes through "R".

With such a configuration, when the driver changes the shift lever SL to a shift position other than "R", even if the shift position is momentarily switched to "R", it is possible to prevent the light pattern X indicating the backward movement of the vehicle 1 from being projected on the road surface behind the vehicle 1. That is, in a case where the vehicle 1 actually moves backward, the light pattern X can be projected on the road surface behind the vehicle 1, so that it is possible to prevent a person around the vehicle 1 from erroneously recognizing that the vehicle 1 moves backward.
(2) In the vehicle road surface drawing device 101 according to (1), the controller 12 is configured to permit the road surface drawing unit 11 to project the light pattern X as the control in the case where the shift position is continuously in "R" for the predetermined time or more, and not to permit the road surface drawing unit 11 to project the light pattern X as the control in the case where the time during which the shift position is in "R" is less than the predetermined time. With such a configuration, it is possible to more accurately determine whether the shift lever SL has passed through "R", that is, whether the driver has operated the shift lever SL with the intention of changing the shift position to a position other than "R".
(3) In the vehicle road surface drawing device 101 according to (1) or (2), the controller 12 is further configured to permit the road surface drawing unit 11 to project the light pattern X in the case where the rotation speed of the wheel of the vehicle 1 in the direction in which the vehicle 1 moves backward is equal to or greater than the threshold value. For example, even when the shift position is in "P" or "N", the vehicle 1 may move backward while stopping on a slope. On the other hand, with the above configuration, in the case where the vehicle 1 moves backward, the light pattern X can be projected on the road surface behind the vehicle 1 regardless of the shift position, so that it is possible to appropriately notify the surroundings of the backward movement of the vehicle 1.
(4) In the vehicle road surface drawing device 101 according to any one of (1) to (3), the controller 12 is further configured to not to permit the road surface drawing unit 11 to project the light pattern X in the case where there is no moving body around the vehicle 1. As described above, in a situation in which it is less necessary to notify the surroundings of the backward movement of the vehicle 1, the projection of the light pattern X can be more appropriately controlled by performing a control such that the light pattern X is not projected.
(5) In the vehicle road surface drawing device 101 according to any one of (1) to (3), the controller 12 may be further configured to permit the road surface drawing unit 11 to project the light pattern X in the case where there is no moving body around the vehicle 1. In this way, in a situation in which there is no moving body in the vicinity that may cause an erroneous recognition that the vehicle is moving backward, the control is performed such that the light pattern is projected, so that it is possible to more appropriately control the projection of the light pattern.
(6) In the vehicle road surface drawing device 101 according to any one of (1) to (5), the controller 12 is configured not to permit the road surface drawing unit 11 to project the light pattern X in the case where the back door BD of the vehicle 1 is opened. With such a configuration, for example, in a situation in which there is a person who is performing work such as opening the back door BD of the vehicle 1 and taking a package in and out of the trunk, it is possible to prevent the person from being dazzled by not projecting the light pattern X.
(7) In the vehicle road surface drawing device 101 according to any one of (1) to (6), the road surface drawing unit 11 is configured to project the light pattern X indicating the travel direction of the vehicle 1 when moving backward. With such a configuration, it is possible to notify a person around the vehicle 1 of the travel direction of the vehicle 1 when moving backward, such as left rear, right rear, or straight backward.

Although the embodiment of the present disclosure has been described above, it is needless to say that the technical scope of the present disclosure should not be construed as being limited by the description of the embodiment. It should be understood by a person skilled in the art that the present embodiment is merely an example, and that various modifications of the embodiment are possible within the scope of the inventions described in the claims. The technical scope of the present disclosure is determined based on the scope of the inventions described in the claims and an equivalent scope thereof.

The present application is based on a Japanese patent application No. 2022-143661 filed on September 9, 2022, and contents thereof are incorporated herein by reference.

## Claims

1. A vehicle road surface drawing device provided in a vehicle configured to change a shift position including at least a reverse position by operating a shift lever, the vehicle road surface drawing device comprising:
a road surface drawing unit configured to project a light pattern indicating backward movement of the vehicle on a road surface behind the vehicle; and
a controller configured to perform a control over the road surface drawing unit such that the road surface drawing unit does not project the light pattern, in a case where the shift lever passes through the reverse position.

2. The vehicle road surface drawing device according to claim 1,
wherein the controller is configured:
to permit the road surface drawing unit to project the light pattern, as the control, in a case where the shift position is continuously in the reverse position for a predetermined time or more, and
not to permit the road surface drawing unit to project the light pattern, as the control, in a case where a time during which the shift position is in the reverse position is less than the predetermined time.

3. The vehicle road surface drawing device according to claim 1 or 2,
wherein the controller is further configured to permit the road surface drawing unit to project the light pattern, in a case where a rotation speed of a wheel of the vehicle in a direction in which the vehicle moves backward is equal to or greater than a threshold value.

4. The vehicle road surface drawing device according to claim 1 or 2,
wherein the controller is further configured not to permit the road surface drawing unit to project the light pattern, in a case where there is no moving body around the vehicle.

5. The vehicle road surface drawing device according to claim 1 or 2,
wherein the controller is further configured to permit the road surface drawing unit to project the light pattern, in a case where there is no moving body around the vehicle.

6. The vehicle road surface drawing device according to claim 1 or 2,
wherein the controller is further configured not to permit the road surface drawing unit to project the light pattern, in a case where a back door of the vehicle is opened.

7. The vehicle road surface drawing device according to claim 1 or 2,
wherein the road surface drawing unit is configured to project the light pattern indicating a travel direction of the vehicle when moving backward.
